# EUROPEAN PATENT SPECIFICATION

(11) **EP 3 793 074 B1**
(45) Date of publication and mention of the grant of the patent: **19.07.2023**
(21) Application number: 19197605.9
(22) Date of filing: 16.09.2019
(51) Int. Cl.: H02K 49/10, H02K 41/03, B60L 7/28

(54) **IMPROVEMENTS IN AND RELATING TO EDDY-CURRENT BRAKES**
VERBESSERUNGEN AN UND IM ZUSAMMENHANG MIT WIRBELSTROMBREMSEN
AMÉLIORATIONS APPORTÉES OU RELATIVES À DES FREINS À COURANTS DE FOUCAULT

(43) Date of publication of application: 17.03.2021
(73) Proprietor: LIM-Tech Limited, Shepshed, Leicestershire LE12 9NH (GB)
(72) Inventor: Alan, Foster, Shepshed, Leicestershire LE12 9HN (GB)
(74) Representative: Abel & Imray LLP

(56) References cited:
- EP-A1- 3 451 516
- WO-A1-2016/178573
- US-A1- 2003 000 415
- US-A1- 2004 262 103

## Description

### Field of the Invention

The present invention concerns eddy-current brakes. More particularly, but not exclusively, this invention concerns an eddy-current brake for a transport system (for example a freight or baggage handling system or an amusement ride, for example a roller coaster) and a train car and a transport system including such a brake. The invention also concerns a method of braking a train in a transport system.

### Background of the Invention

An electromagnetic transport system such as a freight or baggage handling system or an amusement ride, for example a roller coaster train, typically comprises a number of cars hitched together in a train. In use, the cars travel along a guide such as a track or an overhead rail.

The most well-known construction of an electric motor comprises a moveable rotor, which rotates inside a fixed, substantially cylindrical stator. The term "rotor" is used herein to describe the passive (not energized) part of the motor that is moved by the electromagnetic field. In some motors, the rotor does not rotate but is, for example, translated linearly. The stator is the active (energized) part of the machine that generates the driving electromagnetic field. It should be understood that these effects are caused by the relative motion between the stator and the rotor, and in practice either one could be actually stationary.

In electromagnetic transport systems, it is well known to use a linear motor to accelerate the cars along the track or rail. Thus the linear motor may comprise a moveable `rotor' mounted on the car and a fixed 'stator' associated with the rail or track. When sufficient current is supplied to the coils of the stator an electromagnetic field is produced which acts on the magnets of the rotor to move the stator (and thereby the car to which it is attached). Thus, it is common for one or more rotors comprising an array of magnets to be affixed to a roller coaster train.

As used herein, the term "roller coaster" may be understood to include any amusement ride in which a car travels along a guide.

It is known to use an eddy-current brake to control the speed of a car or train in such a transport system. As is well known, when a conductor is subject to a changing electromagnetic field, eddy-currents will be induced in the conductor. The eddy-currents will generate their own electromagnetic field which opposes the change, and consequently will generate a force that acts to oppose the movement. An eddy-current brake uses this effect to control the speed of a car or train. For example, the electromagnetic field generated by a stator adjacent to the guide (e.g. the track or rail) may be used to provide the moving (relative to the car) electromagnetic field. A moveable conductor is mounted on the car such that, in use, when the conductor is moved into a braking position and passes the stator, eddy-currents are induced in the conductor and consequently a braking force is generated. (Alternatively, the conductor may be mounted on the guide and the magnet mounted on the car.) Eddy-current brakes have found widespread application in safety-critical systems including roller coasters because they are mechanically simple, reliable and do not wear out. They are also seen as being 'fail safe', that is they automatically provide braking without the need for an external power supply.

It is known to use an eddy-current brake as an anti-rollback brake for a roller coaster. A roller coaster may include one or more hills. Typically, a train is launched and provided it has sufficient kinetic energy it will crest the hill and continue along the track. However, if the train does not have sufficient energy it may roll back down the hill. An anti-rollback brake is designed to slow the train as it rolls back to prevent damage. In one prior art example one or more conductive plates are located along the track and interact with a magnet array mounted on a car to produce the braking force. Eddy-current brakes are not directionally sensitive so they will brake the moving train whether it is travelling forward or rolling back. To prevent the anti-rollback brake reducing the speed of the car on the way up the hill the plates are moved away from the path of the magnet, for example by lowering the plates below the magnet level or pivoting them out of reach. It is safety-critical that the anti-rollback brake is in position before the possibility of rollback arises. The use of complex mechanisms to move the plate into position may give rise to reliability issues. Accordingly, it would be advantageous to provide a mechanically simple anti-rollback brake. Additionally or alternatively, it would be advantageous to provide a 'fail safe' anti-rollback brake.

It is also known to use an eddy-current brake as a trim brake, for example for a roller coaster. A trim brake is used to reduce the speed at which a train (or car) is travelling on a particular section of track. For example, a trim brake may be used to reduce the speed of the train prior to reaching a curved section of track. The speed of the train is measured upstream of the trim brake and, in response, the trim brake is activated to reduce the speed of the train. Typically, the trim brake is applied by moving a conductor into an active position in which it is close enough to a magnet array mounted on a car that a braking force is generated when the array passes the conductor. WO2016/178573 discloses an example of such a roller coaster eddy-current trim brake. In the device of WO2016/178573 at least one row of magnets is mounted on the car, and an induction blade having an elongated braking edge is located along the route of the car. The induction blade is mounted for pivotal movement between an active position, for trimming the speed of the car while it passes the trim brake, and an inactive position. The amount of braking force applied is determined by the time the induction blade remains in the active position. An actuator is used to move the induction blade between the active and inactive positions. Again, the use of complex mechanisms to move the plate into position may give rise to reliability issues. Accordingly, it would be advantageous to provide a mechanically simple trim brake. Furthermore, it would be advantageous to provide a trim brake that allowed for greater control over the level of braking force applied.

It is known in the prior art to vary the braking effect of the eddy-current brakes by misaligning the poles of opposing magnets; however, the mechanism used to achieve this is mechanically complex.

The present invention seeks to mitigate the above-mentioned problems. Alternatively or additionally, the present invention seeks to provide an improved eddy-current brake for a transport system, for example an amusement ride, for example a roller coaster.

EP 3 451 516 A1 discloses an eddy current brake magnet arrangement, comprising an at least partially ferromagnetic magnet carrier which carries along a following axis a plurality of braking field magnets arranged one behind the other with alternating polarization directions orthogonal to the following axis and mutually parallel. The magnet carrier extends from a magnet side closer to the braking field magnets in the direction of the braking field magnets and the braking field magnets each extend between one of the magnet carriers closer to the carrier side and an induction side further away from the magnet carrier. A magnetic flux changing means is designed to produce at least one magnetic flux magnet arrangement in an area of the eddy current brake magnet arrangement starting from the induction side and extending in the direction of the magnet carrier.

US 2003/0000415 A1 discloses apparatus, systems and methods for levitating and moving objects. The embodiments incorporate a track with lower rails having permanent magnets abutted against each other and aligned such that the upper surface of each of the lower rails has a uniform polarity; and the object with upper rails having permanent magnets aligned with the lower rails and oriented to oppose the polarity of the lower permanent magnets. Ferrous backing plates behind the lower rails and/or the upper rails may be incorporated. Embodiments may also incorporate a third rail of an electroconductive material, and a driving disc positioned near the third rail. Permanent magnets in the driving disc may be rotated with the driving disc in the presence of the third rail to accelerate the upper rails with respects to the lower rails.

US 2004/0262103 A1 discloses an amusement device with a personal transportation device, moving along a guide track arrangement, and eddy-current braking device, comprising a magnet arrangement and an induction body, for the selective braking of the personal transportation device, with one of the pieces of either the magnet arrangement or the induction body being provided on a guide track arrangement and the other piece being connected to the personal transportation device. The magnet arrangement comprises at least two partial magnet arrangements each with at least one permanent magnet, said partial magnet arrangements are, at least in the operating position thereof, arranged essentially orthogonal to the braking area guide track direction, at a separation from each other, with the induction body being arranged between the partial magnet arrangements during the braking. The partial magnet arrangements may be displaced relative to each other.

### Summary of the Invention

The invention is defined by the eddy-current brake assembly with the features of claim 1 and the method of braking a roller-coaster train with the features of claim 13. Preferred embodiments are disclosed in the dependent claims.

A first aspect of the invention provides an eddy-current brake assembly. The eddy-current brake assembly comprises: a plurality of magnets each having a pair of poles; a shield, comprising magnetically conductive portions and magnetically non-conductive portions; and an actuator. The shield and the magnets are arranged to be moved relative to each other by the actuator between a braking position, in which at least one pole of each of the pairs of poles is aligned with a corresponding magnetically conductive portion of the shield, and free-running position, in which said corresponding magnetically conductive portions are misaligned from said poles.

A second aspect of the invention provides a train car including an eddy-current brake according to the first aspect of the invention.

A third aspect of the invention provides a transport system, for example an amusement ride, for example a roller coaster, including a guide (e.g. a track or overhead rail), a train car, and an eddy current brake according to the first aspect of the invention.

A fourth aspect of the invention provides a method of braking a transport system train, for example a roller-coaster train. The method comprises moving a plurality of magnets and a shield relative to each other between a braking position, in which at least one pole of each of the magnets is aligned with a corresponding magnetically conductive portion of the shield, and a free-running position, in which said corresponding magnetically conductive portions are misaligned from said poles.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- FIG. 1: is a schematic view of a roller coaster including eddy-current brakes in accordance with a first example embodiment of the invention;
- FIG. 2: is a schematic exploded view of a portion of an eddy-current brake in accordance with the example embodiment of Fig. 1;
- FIG. 3: is a schematic side view of (a) the eddy-current brake of Fig. 2 in a braking postion, (b) the eddy-current brake of Fig. 2 in a free-running position, and (c) an eddy-current brake, in accordance with another example embodiment of the invention, in a braking position;
- FIG. 4: is a diagram showing a control system for the eddy-current brakes of Figs. 1 to 3;
- FIG. 5: is schematic partial cross-section view of an eddy-current brake according to an example embodiment of the invention, being (a) a cross-section view and (b) a side view of a pneumatic cylinder forming part of the brake;
- FIG. 6: is a side, partially transparent view of a magnet array and shield plate of the brake of Fig. 5;
- Fig. 7: is a schematic illustration of the backiron, magnet array and shield plate of the brake of Fig. 5 showing flux paths in the braking position;
- Fig. 8: is a schematic view of the arrangement of Fig. 7 in a free-running position.
- Fig. 9: shows an example mechanism to control the braking force (a) in a side view, (b) in a partial top view showing a limiting element in a "Brake full on" position and (c) to (e) in a partial top view showing respectively each of three individual limiting elements.

### Detailed Description

As just stated, the first aspect of the invention provides an eddy-current brake assembly having the features set out in claim 1 below.

The magnetically conductive portions will typically be ferromagnetic and the magnetically non-conductive portions will typically not be ferromagnetic.

In the braking position, the magnetically conductive portion of the shield may fully or partially cover the poles; thus, the magnetically conductive portion of the shield may be wider or narrower than the pole end of the magnet.

The magnets may be arranged in an array, which may be a row of the magnets. The magnets may be permanent magnets. The magnets may be mounted on a plate. The magnets may be mounted with a first set of magnets having their N pole furthest from the plate alternating with a second set of magnets having their S pole furthest from the plate. Alternatively, all of the magnets may be mounted with their poles facing the same way, i.e. they may all be mounted with the N pole furthest from the plate or they may all be mounted with their S pole furthest from the plate. A gap may be defined between each magnet and its nearest neighbour on the plate. It may be that each gap is approximately the same size and shape as each magnet.

The plurality of magnets may be arranged in a single-sided array (that is, with all of the magnets coplanar), so that in use they are on the same side of an electrically conducting plate (e.g. a fin) in which they produce eddy currents.

The plurality of magnets may be arranged in a double-sided array, i.e. with magnets in two planes, so that in use they are on both sides of a fin in which they produce eddy currents. The double-sided array may include a U-shaped backiron, having a first flange and a second flange joined together by a backbone. The magnets may be mounted in pairs on the interior sides of the flanges of the U-shaped backiron. The magnets may be mounted along the length of the backiron. A first set of the magnets may be mounted on the first flange, having their North (N) pole facing away from the first flange and towards the second flange. A second set of the magnets may be mounted on the second flange, having their South (S) pole facing away from the second flange and towards the first flange. Alternatively, the magnets may be arranged to alternate in polarity along each flange, with opposite poles facing each other. The double-sided array may include two of the shields, one for each set, arranged to be moved by actuators between a braking position, in which at least one pole of each of the magnets is aligned with a corresponding magnetically conductive portion of the shield, and a free-running position, in which said corresponding magnetically conductive portions are misaligned from said poles.

All of the magnets may be of the same length. The magnets may be arranged in an array having a constant pitch.

The shield may be flat. The shield may be rectangular. The shield may be steel. The shield may for example have a thickness of at least 0.5 cm, at least 0.75 cm, at least 1 cm or at least 1.5 cm. The shield may be a plate.

The shield plate may comprise a rectangular frame and a plurality of plate inserts, which may be the magnetically conductive portions. The separation between adjacent plate inserts may be the same as the length of the plate insert (in the same direction). The plate inserts may be the same size and shape as magnets and gaps in the magnet array. The plate inserts may be separated from each other by the same distance as the separation of the magnets in the magnet array.

The magnetically conductive portions may be made of a first material, for example a mild steel, and the magnetically non-conductive portions may be made of a second material, for example a stainless steel.

The actuator may be arranged to move the shield. The actuator may be arranged to move the magnets.

The actuator may be arranged to move the shield and the magnets relative to each other to positions in between the braking position and the free-running position, so that said corresponding magnetically conductive portions cover said poles only partially. The brake assembly may include a plurality of limiting elements, each arranged to limit movement of the shield and/or the magnets to a different selected braking position.

The actuator mechanism may be a hydraulic actuator, a pneumatic actuator or an electric actuator.

The brake assembly may include a housing, for example a protective cover covering the shield and actuator.

The actuator may be arranged to return the shield to the braking position in the event of a power failure, for example by the action of a spring or pneumatic accumulator.

The brake assembly may further include an actuation control system. The actuation control system may include a sensor arranged to provide an indication of the speed of a train, for example a roller-coaster train. The actuation control system may include a processor arranged to receive the indication of the speed of the train to send a signal to cause the actuator to move the shield to a pre-selected position. The pre-selected position may be the braking position, the free-running position and/or a position between the braking and the free-running positions. The processor may be configured to compare the speed of the train with a desired maximum speed and, in dependence on the difference between the measured and desired speed of the train, alter the position of the shield to produce a desired level of braking using the actuator.

The second aspect of the invention provides a train car including an eddy-current brake according to the first aspect of the invention.

The brake may be mounted on the underside of the car. The brake may be mounted on the top of the car. The brake may be mounted at the side of the car.

The third aspect of the invention provides a transport system, for example an amusement ride, for example a roller coaster, including a guide (e.g. a track or overhead rail), a train car, and an eddy current brake assembly according to the first aspect of the invention.

The train car may include the eddy current brake. The track or overhead rail may include a braking plate (e.g. a braking fin) made of a magnetically non-conductive material. The braking plate may be mounted above the track. The braking plate may be mounted below the track. The braking plate may be mounted in a central portion of the width of the track.

On the other hand, the eddy current brake may form part of, be integral to, or provided with the track or overhead rail. The train car may include a braking plate (e.g. a braking fin) made of a magnetically non-conductive material.

The shield may be located between the magnets and the braking plate. The braking plate may be electrically conductive. The braking plate may be made of a magnetically non-conductive material, for example, aluminium (for example high-strength aluminium) or beryllium copper.

The brake assembly may be adjacent to the braking plate.

A first set of the magnets may be mounted to sit on a first side of the braking plate and a second set of the magnets may be mounted to sit on the opposite side of the braking plate. The magnets may be mounted on a backiron that sits astride the braking plate.

The fourth aspect of the invention provides a method of braking a transport system train, having the features set out in claim 13 below.

Of course, in order to move the shield and the magnets relative to each other, it may be that the magnets are moved, the shield is moved, or both the shield and the magnets are moved.

The method may further comprise moving the plurality of magnets and the shield relative to each other between one or more positions intermediate to the braking and the free-running positions.

The method may further comprise receiving an indication of the speed of a train from a sensor, comparing the speed of the train with a desired maximum speed and in dependence on the difference between the measured and desired speed of the train altering the position of the magnets and the shield relative to each other to produce a predetermined level of braking.

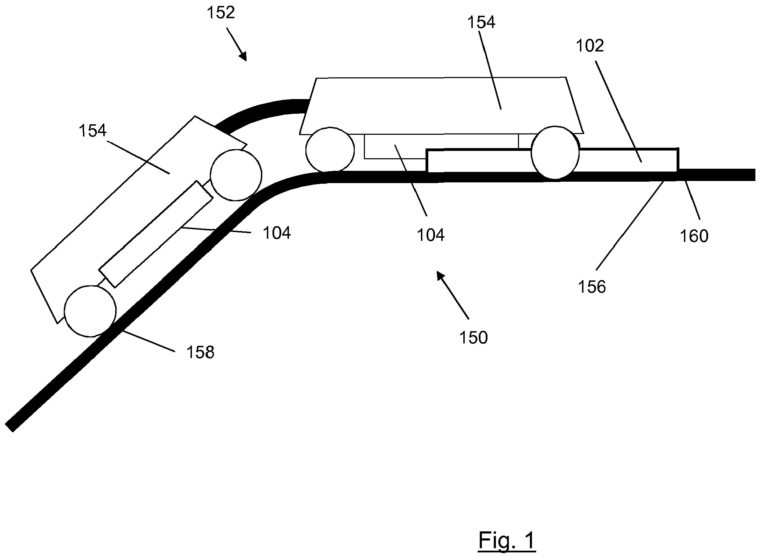

An example transport system, in the form of a roller coaster (Fig. 1), includes eddy-current brakes in accordance with a first example embodiment of the invention. A roller coaster 150 includes a train 152 and a track 156. The train 152 includes cars 154, each car having a (in this example, beryllium copper) braking fin 104 mounted on its underside. The train 152 travels along the track 156 which includes an uphill section 158 followed by a flat section 160. A brake assembly 102 is mounted on the flat section 160, above and towards the centre of the track 156, such that it is adjacent to the brake braking fin 104.

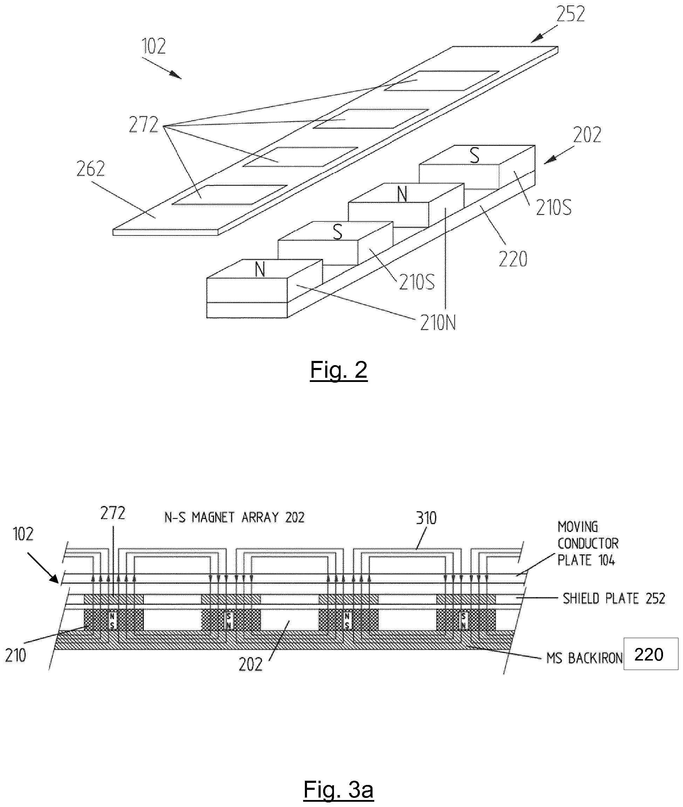

The brake assembly 102 includes a magnet array 202 and a rectangular shield plate 252 (Fig. 2).

The magnet array 202 comprises a plurality of magnets 210 mounted on a rectangular steel backiron 220. The magnets 210 are mounted in a line, with magnets 210N having their N pole furthest from the backiron 220 alternating with magnets 210S having their S pole furthest from the backiron 220. A gap is defined between each magnet 210N, 2010S, each gap in this example being approximately the same size and shape as each magnet 210.

The rectangular shield plate 252 consists of a rectangular frame 262 and a plurality of plate inserts 272 inserted into the frame. The plate inserts 272 are separated from each other by a distance equal to the distance between adjacent magnets 210 in the magnet array 202. The plate inserts 272 are approximately the same size and shape as each other and as the magnets 210 and gaps in the magnet array 202. (In this example, the magnet is 25mm deep and 50mm wide and the plate inserts are 50 mm wide and 10 mm thick.)

In this example, the frame 262 is aluminium (in other example embodiments another non-magnetically conducting material such as non-magnetic stainless steel may be used). In this example the plate inserts 272 are mild steel (in other example embodiments another ferromagnetic material may be used).

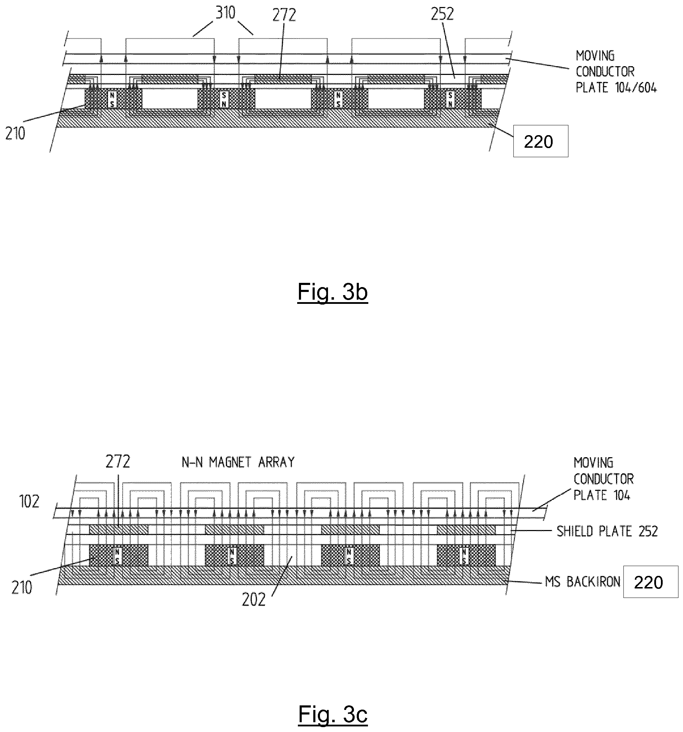

The operation of the example brake will now be described with reference to Fig. 3. As discussed above, in use the brake assembly 102 is adjacent to a moving conductor plate, fin 104. The shield plate 252 is between the magnet array 202 and the fin 104. In a braking configuration (Fig. 3(a)), the shield plate 252 is positioned so that the plate inserts 272 are aligned with the magnets 210, covering the poles of the magnets 210N,S. In the braking configuration, lines of magnetic flux 310 are able to pass from a pole of a first magnet 210, through the covering steel plate inserts 272, into the fin 104 - forming eddy currents - and back through a neighbouring steel plate insert 272 to the opposite pole of a neighbouring, second magnet 210, then through the backiron 220 to the first magnet. The eddy currents formed in the fin 104 result in a braking force on the cars 154 and hence the train 152.

In an free-running configuration (Fig. 3(b)), the shield plate 252 has been moved by an actuator from the braking configuration so that it is positioned to be misaligned from the magnets 210, uncovering the poles of the magnets 210N,S (with the plate inserts 272 aligned with the gaps in the magnet array 202. In the free-running configuration, the lines of magnet flux 310 effectively follow a magnetic short-circuit through the shield plate and between adjacent magnets 210. The flux lines 310 extend only weakly from a pole of a magnet 210 through the frame 262 of the shield plate 252, and only very weakly or not at all to the fin 104. Few if any eddy currents are formed in the fin 104 and there is thus only a very weak, or no, braking force on the cars 154 and hence the train 152.

If the magnets 210 are only partially shielded by the shield plate 252, by positioning it between the braking and free-running positions, then a reduced braking force will be provided, rather than turning the braking force off completely; hence the brake assembly 102 can also be used as a trim brake.

An arrangement in which the orientation of the poles of successive, neighbouring magnets 210 alternates along the backiron 220, as shown in Fig. 3(a) and (b) has higher flux densities than the arrangement shown in Fig. 3(c), in which successive, neighbouring magnets have the same orientation along the backiron 220. The alternating arrangement is therefore more magnetically efficient, and is preferred, but the arrangement of Fig. 3 is also viable.

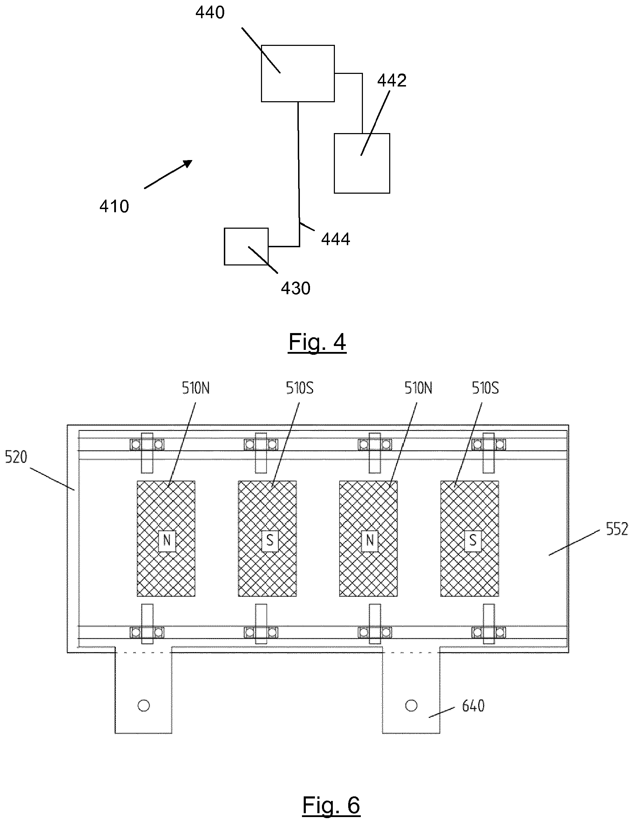

Brake assembly 102 includes an actuation control system 410 (Fig. 4) arranged to move the shield plate 252 between the braking and the free-running positions. The control system 410 includes a sensor 442 arranged to measure the speed of the train 152 and an actuator 430 which acts on the shield plate 252. A processor 440 receives an indication of the speed of the train 152 from the sensor 442 and sends signals to cause the actuator 430 to move the shield plate 252 to a pre-selected position (braking, free-running or an intermediate position) relative to the magnet array 202. Thus, in this example, processor 440 compares the speed of the train 152 with a desired maximum speed and in dependence on the difference between the measured and desired speed of the train 152 alters the position of the shield plate 252 to produce a desired level of braking using the actuator 430. Thus, if the highest level of braking is required the processor 440 causes the actuator 430 to move the shield plate 252 to the braking position. If no braking is required, the processor 440 causes the actuator 430 to move the shield plate 252 to the free-running position.

As a safety measure, in this example, in the event of a power failure, the actuator 430 returns the shield plate 252 to the braking position, by the action of a strong spring incorporated into the cylinder of the actuator 430 (in other embodiments an alternative safety measure, for example a pneumatic accumulator, may be provided instead of or as well as the spring).

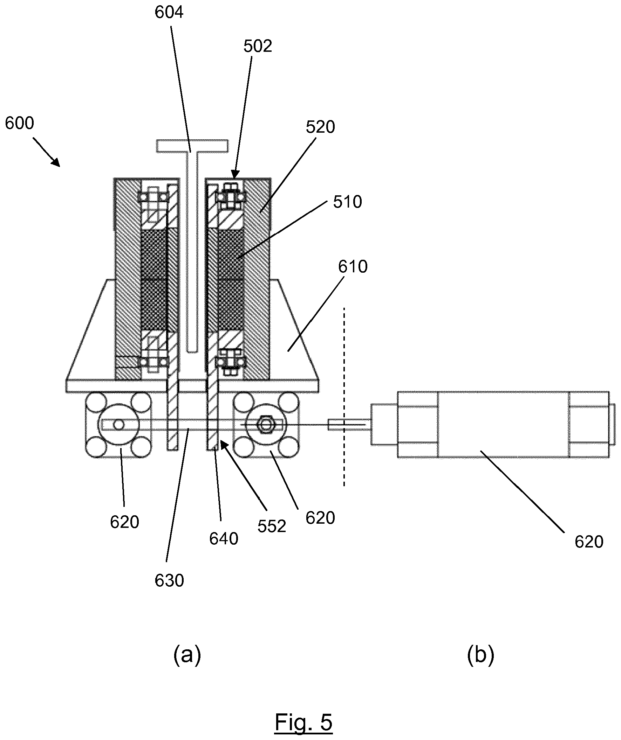

In a second example embodiment of the invention (Fig. 5), a brake assembly 600 includes a double-sided magnet array 502 mounted on a support frame 610. A fin 604, depending from a car (not shown) extends between the two halves of the magnet array 502. Each half of the double-sided magnet array 502 includes a steel backiron 520, upon which a plurality of magnets 510 are mounted. A shield 552, including a flange 640 is slidably mounted in front of each of the halves of the magnet array 502. The two shields 552 are each actuated to slide by the action of a pneumatic cylinder 620. Each cylinder 620 has a piston extending in a plane parallel to the plane of the magnet array 502 and the extension and retraction of the piston slides both of the shields 552 simultaneously via a linkage bar 630 passing from the piston of each cylinder 620 through a hole in the flange 640 of each shield plate 552.

The arrangement of magnets in one half 500 of the double sided magnet array 502 is shown in Fig. 6. In this example, the magnets are mounted on the backiron 520, and are spaced in a horizontal direction. Neighbouring magnets have opposite polarity (i.e. they present opposite poles to the fin 604). Thus, in this example, the first and third magnets 510N present a North pole to the fin 604 and the second and fourth magnets 510S present a South pole to the fin 604. (Fig. 6 also shows the shield 520 but no detail is shown in the figure, other than its depending flanges 640.)

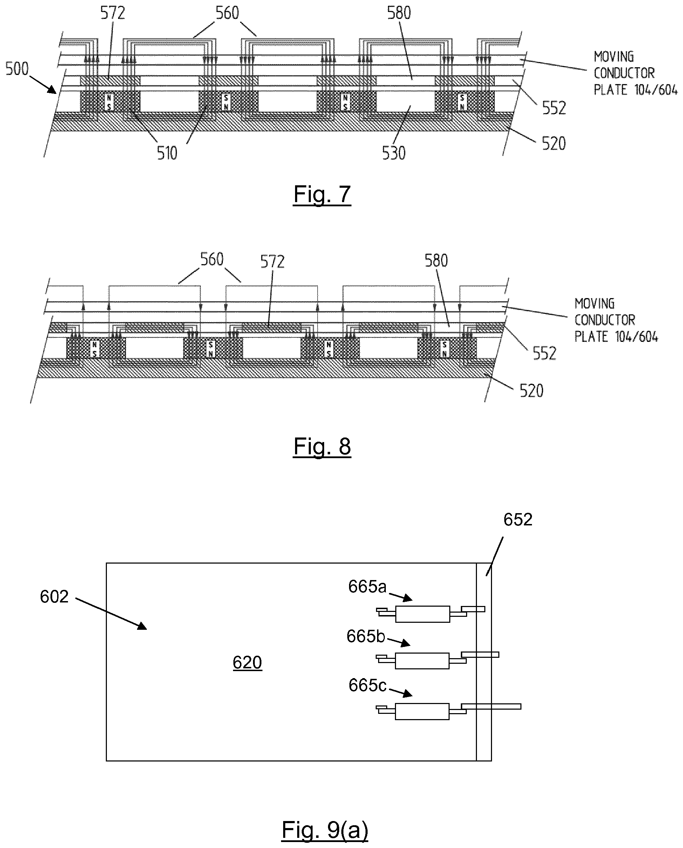

The structure and operation of the half 500 of the magnet array 502 and the shield 552 is shown in Fig. 7. The magnets 510 are spaced along the backiron 520, each magnet being separated from its neighbour by a non-magnetically conducting material 530, in this example aluminium. The shield 552 comprises mild steel sections 572, which are magnetically conductive and in this example match the magnets in size shape and pitch so that they exactly cover the magnets 510, and stainless steel sections 580 (which in other embodiments may for example be aluminium), which are magnetically non-conductive and make up the rest of the shield 552.

Thus, when the shield is in the braking position, the lines of flux 560 from the magnets 510 passes out from each magnet 510, through the mild steel section 572 of the shield 552 covering the magnet 510 and then returns through the neighbouring mild steel sections 510 to the neighbouring magnets 510 (which are arranged to present a pole of opposite polarity to the shield 552). When the shield 552 is displaced from the braking position into a free-running position (Fig. 8), flux from neighbouring magnets 510 takes the easier path through the mild steel plates 572, effectively magnetically shorting out the neighbouring magnets.

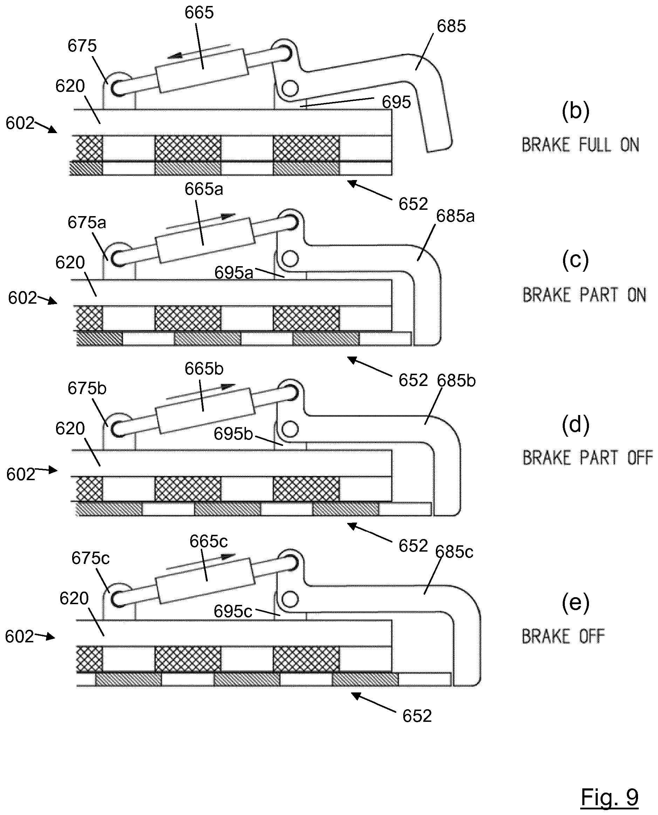

The skilled person will readily identify different ways to control the movement of the shield in different embodiments of the invention. An example approach is shown in Fig. 9. In this approach, a shield plate 652 is moved relative to magnet array 602 by the action of an actuator (not shown in Fig. 9 but for example an actuator such as the pneumatic cylinder 620 above). Further actuators, in this example three pneumatic cylinders 665a-c (in alternative embodiments the pneumatic cylinders 665 may be replaced with solenoids), are provided in a vertical stack on the backiron 620. Each pneumatic cylinders 665a-c is anchored at one end to the shield plate 652 via a first anchor plate 675a-c. Each piston actuator 665a-c is connected at its other end to a pivoting "S"-bracket 685a-c. Each "S-bracket" 685a-c is pivotally connected to a second anchor plate 695a-c, which is in turn fixedly mounted on the backiron 620 of the magnet array 602.

Each of the 'S' brackets 685a-c is of a different length, and thereby acts as a limiting element with the stopping position of the shield plate 652 being limited by whichever 'S' bracket 685a-c is moved into its path by activation of the respective pneumatic cylinder 665. Together with 'no activation' these 3 "S" brackets give 4 stopping positions.

The pneumatic cylinders 665a-c (in alternative embodiments the pneumatic cylinders 665a-c may be replaced for example with solenoids) activate whichever 'S' bracket 685a-c is required to stop the plate 652, according to a control signal. The activated S bracket 685a-c is pivoted into position by the pneumatic cylinder 665a-c and the motion of the sliding shield plate 652 is halted, thereby altering the magnitude of braking force.

When the maximum braking force is required (i.e. the brake is to be full on - Fig. 9(b)), all of the pneumatic cylinders 665a-c are controlled by the control system (not shown in Fig. 9) to retract their pistons, such that all of the "S"-brackets 685 are pivoted away from the shield plate 652 and thus do not affect the motion of the shield plate 652, which is fully aligned with the magnet array 502 so that a braking force is applied, as described above. When a reduced braking force is required (i.e. the brake is partially on - Fig. 9(c)), the control system causes (i) if they have previously been extended, the pistons of cylinders 665b and/or 665c to be retracted, pivoting the S-bracket 685b and/or 685c out of the path of the shield plate 652, (ii) the actuator (not shown in Fig. 9) to move the shield plate 652 towards the stopping ends of the S-brackets and (iii) the piston of the pneumatic cylinder 665a to be extended, forcing the shortest "S"-bracket 685a to rotate into the path of the moving shield plate 652, stopping the shield plate 652 in a position in which it is partially misaligned from the magnet array 502, thus providing a reduced braking force. When a still further reduced braking force is required (i.e. the brake is to be partially off - Fig. 9(d)), the control system causes (i) if they have previously been extended, the pistons of cylinders 665a and/or 665c to be retracted, pivoting the S-bracket 685a and/or 685c out of the path of the shield plate 652, (ii) the actuator to move the shield plate 652 towards the stopping ends of the S-brackets and (iii) the piston of the pneumatic cylinder 665b to be extended, forcing the mid-length "S"-bracket 685b to rotate into the path of the moving shield plate 652, stopping the shield plate 652 in a position in which it is further misaligned from the magnet array 502, further reducing the braking force. When no braking force is required (i.e. the brake is to be fully off - Fig. 9(e)), the control system causes (i) if they have previously been extended, the pistons of cylinders 665a and/or 665b to be retracted, pivoting the S-bracket 685a and/or 685b out of the path of the shield plate 652, (ii) the actuator to move the shield plate 652 towards the stopping ends of the S-brackets and (iii) the piston of the pneumatic cylinder 665c to be extended, forcing the longest "S"-bracket 685c to rotate into the path of the moving shield plate 652, stopping the shield plate 652 in a position in which it forms magnetic short-circuits with the magnet array 502, as described above. Thus the control system can control the amount of braking provided by the brake by controlling the extension or withdrawal of the piston in the pneumatic cylinders 685a-c.

Of course, in other example embodiments more or fewer "S"-brackets 685 may be used, to provide more or fewer stopping positions. In other example embodiments, alternative elements that controllably limit or otherwise control the position of the shield plate may be provided instead of the "S"-brackets 685.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the examples described above, eddy current brakes according to example embodiments of the invention induce eddy currents in a fin associated with the track. In other embodiments, the fin may be replaced with a series of conductors, for example a series of conducting plates, which may for example be arranged along the side of the track or an overhead rail.

In the examples described above, the magnets of the eddy current brakes according to example embodiments of the invention are provided in the car. In other embodiments, the magnets may be provided on or beside the track or overhead rail, and may be arranged to induce eddy currents in a conductor attached to the car to brake the car. In that case, the shield and/or the actuator may still be on the car or, on the other hand, one or more shields and/or actuators may be on or beside the track or overhead rail.

The examples above describe an amusement ride, in the form of a roller coaster, but the skilled person will understand that the eddy current brake can be used in other transport systems, for example a freight handling system or a baggage handling system.

## Claims

1. An eddy-current brake assembly (102) comprising: a plurality of magnets (210) each having a pair of poles; a shield (252), comprising magnetically conductive portions (272) and magnetically non-conductive portions (262); and an actuator (430); wherein the shield (252) and the magnets (210) are arranged to be moved relative to each other by the actuator (430) between a braking position, in which at least one pole of each of the pairs of poles is aligned with a corresponding magnetically conductive portion (272) of the shield (252), and a free-running position, in which said corresponding magnetically conductive portions (272) are misaligned from said poles.

2. A brake assembly according to claim 1, wherein the plurality of magnets (210) are arranged in a double-sided array.

3. A brake assembly according to claim 1 or claim 2, wherein the shield (252) is a plate comprising a rectangular frame (262) and a plurality of plate inserts (272).

4. A brake assembly according to any preceding claim, wherein the actuator (430) is arranged to move the shield (252) and the magnets (210) relative to each other to positions in which said corresponding magnetically conductive portions (272) cover said poles only partially.

5. A brake assembly according to any preceding claim, wherein the actuator (430) is arranged to return the shield (252) to the braking position in the event of a power failure,

6. A brake assembly according to any preceding claim further including an actuation control system (410) including a sensor (442) arranged to provide an indication of the speed of a train and a processor (440) arranged to receive the indication of the speed of the train and to send a signal to cause the actuator (430) to move the shield (252) to a pre-selected position.

7. A brake assembly according to claim 6, wherein the processor is configured to compare the speed of the train with a desired maximum speed and, in dependence on the difference between the measured and desired speed of the train, alter the position of the shield (252) to produce a desired level of braking using the actuator

8. A train car including an eddy-current brake assembly (102) according to any preceding claim.

9. A transport system including a guide, a train car, and an eddy current brake assembly (102) according to any preceding claim.

10. A transport system according to claim 9, wherein the train car includes the eddy current brake assembly (102).

11. A transport system according to claim 10, wherein a first portion of the magnets (210) is mounted to sit on a first side of a braking fin (104) and a second portion of the magnets (210) is mounted to sit on the opposite side of the braking fin.

12. A transport system according to claim 11, wherein the eddy current brake assembly (102) forms part of, is integral to, or is provided with the guide.

13. A method of braking a roller-coaster train, the method comprising:
moving a plurality of magnets (210) and a shield (252) relative to each other between a braking position, in which at least one pole of each of the magnets (210) is aligned with a corresponding magnetically conductive portion (272) of the shield (252), and
a free-running position, in which said corresponding magnetically conductive portions (272) are misaligned from said poles.

14. A method according to claim 13, further comprising moving the plurality of magnets (210) and the shield (252) relative to each other between one or more positions intermediate to the braking and the free-running positions.

15. A method according to claim 13 or claim 14, further comprising receiving an indication of the speed of a train from a sensor (442), comparing the speed of the train with a desired maximum speed and in dependence on the difference between the measured and desired speed of the train altering the position of the magnets (210) and the shield (252) relative to each other to produce a predetermined level of braking.

## Patentansprüche

1. Wirbelstrombremsenanordnung (102) mit:
mehreren Magneten (210), die jeweils ein Paar von Polen aufweisen;
einer Abschirmung (252) mit magnetisch leitfähigen Abschnitten (272) und magnetisch nichtleitfähigen Abschnitten (262); und
einem Aktuator (430);
bei der die Abschirmung (252) und die Magnete (210) dazu angeordnet sind, durch den Aktuator (430) relativ zueinander zwischen einer Bremsposition, in der mindestens ein Pol jedes Paars von Polen mit einem entsprechenden magnetisch leitfähigen Abschnitt (272) der Abschirmung (252) ausgerichtet ist, und einer Freilaufposition, in der die entsprechenden magnetisch leitfähigen Abschnitte (272) nicht mit den Polen ausgerichtet sind, bewegt zu werden.

2. Bremsenanordnung nach Anspruch 1, bei der die mehreren Magnete (210) in einem doppelseitigen Array angeordnet ist.

3. Bremsenanordnung nach Anspruch 1 oder Anspruch 2, bei der die Abschirmung (252) eine Platte mit einem rechtwinkligen Rahmen (262) und mehreren Platteneinsätzen (272) ist.

4. Bremsenanordnung nach einem der vorhergehenden Ansprüche, bei der der Aktuator (430) dazu angeordnet ist, die Abschirmung (252) und die Magnete (210) relativ zueinander zu Positionen zu bewegen, an denen die entsprechenden magnetisch leitfähigen Abschnitte (272) die Pole lediglich teilweise bedecken.

5. Bremsenanordnung nach einem der vorhergehenden Ansprüche, bei der der Aktuator (430) dazu angeordnet ist, die Abschirmung (252) im Falle eines Stromausfalls zu der Bremsposition zurückzubringen.

6. Bremsenanordnung nach einem der vorhergehenden Ansprüche, ferner mit einem Betätigungssteuerungssystem (410) mit einem Sensor (442), der dazu angeordnet ist, eine Angabe der Geschwindigkeit eines Zugs zu liefern, und einem Prozessor (440), der dazu angeordnet ist, die Angabe der Geschwindigkeit des Zugs zu erhalten und ein Signal zum Bewirken, dass der Aktuator (430) die Abschirmung (252) zu einer im Voraus ausgewählten Position bewegt, zu senden.

7. Bremsenanordnung nach Anspruch 6, bei der der Prozessor dazu ausgebildet ist, die Geschwindigkeit des Zugs mit einer gewünschten Maximalgeschwindigkeit zu vergleichen und in Abhängigkeit von dem Unterschied zwischen der gemessenen und der gewünschten Geschwindigkeit des Zugs die Position der Abschirmung (252) zum Erzeugen einer gewünschten Stufe einer Bremsung unter Verwendung des Aktuators zu ändern.

8. Zugwagen mit einer Wirbelstrombremsenanordnung (102) nach einem der hervorgehenden Ansprüche.

9. Transportsystem mit einer Führung, einem Zugwagen und einer Wirbelstrombremsenanordnung (102) nach einem der vorhergehenden Ansprüche.

10. Transportsystem nach Anspruch 9, bei dem der Zugwagen die Wirbelstrombremsenanordnung (102) aufweist.

11. Transportsystem nach Anspruch 10, bei dem ein erster Teil der Magnete (210) so montiert ist, dass er auf einer ersten Seite einer Bremsrippe (104) sitzt, und ein zweiter Teil der Magnete (210) so montiert ist, dass er auf der entgegensetzten Seite der Bremsrippe sitzt.

12. Transportsystem nach Anspruch 11, bei dem die Wirbelstrombremsenanordnung (102) einen Teil der Führung bildet, integral mit dieser ist oder mit dieser versehen ist.

13. Verfahren zum Bremsen eines Achterbahnwagens, mit folgenden Schritten:
Bewegen mehrerer Magnete (210) und einer Abschirmung (252) relativ zueinander zwischen einer Bremsposition, in der mindestens ein Pol jedes der Magnete (210) mit einem entsprechenden magnetisch leitfähigen Abschnitt (272) der Abschirmung (252) ausgerichtet ist, und einer Freilaufposition, in der die entsprechenden magnetisch leitfähigen Abschnitte (272) nicht mit den Polen ausgerichtet sind.

14. Verfahren nach Anspruch 13, ferner mit Bewegen der mehreren Magnete (210) und der Abschirmung (252) relativ zueinander zwischen ein oder mehreren Positionen zwischen der Brems- und der Freilaufposition.

15. Verfahren nach Anspruch 13 oder Anspruch 14, ferner mit Erhalten einer Angabe der Geschwindigkeit eines Zugs von einem Sensor (442), Vergleichen der Geschwindigkeit des Zugs mit einer gewünschten Maximalgeschwindigkeit und, in Abhängigkeit von dem Unterschied zwischen der gemessenen und der gewünschten Geschwindigkeit des Zugs, Ändern der Position der Magnete (210) und der Abschirmung (252) relativ zueinander zum Erzeugen einer gewünschten Stufe einer Bremsung.

## Revendications

1. Ensemble de frein à courant de Foucault (102) comprenant : une pluralité d'aimants (210) chacun ayant une paire de pôles ; un bouclier (252), comprenant des parties magnétiquement conductrices (272) et des parties magnétiquement non conductrices (262) ; et un actionneur (430) ; dans lequel le bouclier (252) et les aimants (210)
sont disposés de manière à être déplacés l'un par rapport à l'autre par l'actionneur (430)
entre une position de freinage, dans laquelle au moins un pôle de chacune des paires de pôles est aligné avec une partie magnétiquement conductrice correspondante (272) du bouclier (252),
et une position de roulement libre, dans laquelle les parties magnétiquement conductrices correspondantes (272) sont désalignées par rapport aux dits pôles.

2. Ensemble de frein selon la revendication 1, dans lequel la pluralité d'aimants (210) sont disposés dans un réseau à double face.

3. Ensemble de frein selon la revendication 1 ou la revendication 2, dans lequel le bouclier (252) est une plaque comprenant un cadre rectangulaire (262) et une pluralité d'inserts de plaque (272).

4. Ensemble de frein selon l'une quelconque des revendications précédentes, dans lequel l'actionneur (430) est arrangé pour déplacer le bouclier (252) et les aimants (210) les uns par rapport aux autres à des positions dans lesquelles lesdites parties magnétiquement conductrices correspondantes (272) ne couvrent lesdits pôles que partiellement.

5. Ensemble de frein selon l'une quelconque des revendications précédentes, dans lequel l'actionneur (430) est disposé pour renvoyer le bouclier (252) en position de freinage en cas de panne de courant,

6. Ensemble de frein selon l'une quelconque des revendications précédentes, comprenant en outre un système de commande d'actionnement (410) comprenant un capteur (442) disposé pour fournir une indication de la vitesse d'un train et un processeur (440) conçu pour recevoir l'indication de la vitesse du train et pour envoyer un signal pour faire en sorte que l'actionneur (430) déplace le bouclier (252) dans une position présélectionnée.

7. Ensemble de frein selon la revendication 6, dans lequel le processeur est configuré pour comparer la vitesse du train à une vitesse maximale souhaitée et, en fonction de la différence entre la vitesse mesurée et la vitesse souhaitée du train, modifier la position du bouclier (252) pour produire un niveau de freinage souhaité à l'aide de l'actionneur.

8. Wagon comprenant un ensemble de frein à courant de Foucault (102) selon l'une quelconque des revendications précédentes.

9. Système de transport comprenant un guide, un wagon et un ensemble de frein à courant de Foucault (102) selon l'une quelconque des revendications précédentes.

10. Système de transport selon la revendication 9, dans lequel le wagon comprend l'ensemble de freinage à courant de Foucault (102).

11. Système de transport selon la revendication 10, dans lequel une première partie des aimants (210) est montée sur le premier côté d'une ailette de freinage (104) et une deuxième partie des aimants (210) est montée sur le côté opposé de l'ailette de freinage.

12. Système de transport selon la revendication 11, dans lequel l'ensemble de frein à courant de Foucault (102) fait partie intégrante du guide ou est fourni avec celui-ci.

13. Procédé de freinage d'un train de montagnes russes, le procédé comprenant :
déplacer une pluralité d'aimants (210) et un bouclier (252) l'un par rapport à l'autre entre une position de freinage, dans laquelle au moins un pôle de chacun des aimants (210) est aligné avec une partie magnétiquement conductrice correspondante (272) du bouclier (252), et
une position de roulement libre, dans laquelle lesdites parties conductrices d'énergie magnétique correspondantes (272) sont désalignées par rapport aux dits pôles.

14. Procédé selon la revendication 13, comprenant en outre le déplacement de la pluralité d'aimants (210) et du bouclier (252) l'un par rapport à l'autre entre une ou plusieurs positions intermédiaires entre la position de freinage et la position de roulement libre.

15. Procédé selon la revendication 13 ou la revendication 14, comprenant en outre la réception d'une indication de la vitesse d'un train par un capteur (442), la comparaison de la vitesse du train avec une vitesse maximale souhaitée et, en fonction de la différence entre la vitesse mesurée et la vitesse souhaitée du train, la modification de la position des aimants (210) et du bouclier (252) l'un par rapport à l'autre pour produire un niveau de freinage prédéterminé.
